# EUROPÄISCHE PATENTSCHRIFT

(11) **EP 3 359 822 B1**
(45) Veröffentlichungstag und Bekanntmachung des Hinweises auf die Patenterteilung: **02.03.2022**
(21) Anmeldenummer: 16729562.5
(22) Anmeldetag: 15.06.2016
(51) Int. Cl.: F16B 2/24, F16B 5/06, F16B 21/08, F16B 43/00

(54) **BEFESTIGUNGSELEMENT**
FASTENING ELEMENT
ÉLÉMENT DE FIXATION

(30) Priorität: 06.10.2015 DE 102015117007
(43) Veröffentlichungstag der Anmeldung: 15.08.2018
(73) Patentinhaber: BJB GmbH & Co. KG, 59755 Arnsberg (DE)
(72) Erfinder: BAUMEISTER, Olaf, 59846 Sundern (DE); FRANKE, Michael, 59846 Sundern (DE)
(74) Vertreter: Ostriga Sonnet Wirths & Vorwerk
(86) Internationale Anmeldenummer: PCT/EP2016/063709
(87) Internationale Veröffentlichungsnummer: WO 2017/059968

(56) Entgegenhaltungen:
- EP-A2- 1 630 426
- WO-A1-2007/025687
- WO-A1-2010/101803
- WO-A1-2012/104250
- WO-A2-2015/007277
- DE-A1-102010 035 012
- DE-A1-102013 014 161
- FR-A1- 2 933 888
- JP-U- H0 716 014
- US-A1- 2004 052 575
- US-A1- 2011 116 890
- US-A1- 2014 250 643

## Beschreibung

Die Erfindung betrifft ein Befestigungselement zur Festlegung zweier Bauteile aneinander, wobei das erste Bauteil eine Durchbrechung und das zweite Bauteil eine Ausnehmung aufweist, und das Befestigungselement zur Festlegung die Durchbrechung durchtaucht und in der Ausnehmung einsitzt, insbesondere zur Festlegung einer LED-Platine auf einem Leuchtenbauteil, mit einer Halteklammer, wobei die Halteklammer
- einen Schaft ausbildet, an dessen einem Ende ein Schaftkopf angeordnet ist,
- ein Spannelement aufweist, welches am Schaftkopf angeordnet ist, und
   mit wenigstens einem Halteelement versehen ist, welches den Schaft in der Ausnehmung des zweiten Bauteils zu halten in der Lage ist.

Gattungsgemäße Befestigungselemente sind in verschiedenen Ausführungsformen in der anmeldereigenen WO 2015/007277 A2 offenbart. Sie dienen der Festlegung zweier Bauteile aneinander, wobei der Fokus der Erfindung auf die Leuchtenindustrie, also die Herstellung und Montage von Leuchten für die Raum- und Gebäudeausleuchtung oder für die Außenbeleuchtung gerichtet ist. In diesem Technikfeld ersetzen zunehmend LED-Leuchtmittel die herkömmlichen Glühwendel- bzw. Gasentladungslampen. LEDs werden in der Regel auf Platinen angeordnet, die mit Leiterbahnen und Anschlüssen für die Verkabelung versehen sind. Darüber hinaus enthalten bei komplexeren Leuchtmitteln die Platinen auch Steuer- und Regelkomponenten. Eine solche Einheit aus LED und Platine, auch als LED-Einheit oder einfach LED bezeichnet, wird auf ein Leuchtenbauteil aufgesetzt, welches in der Regel nicht nur der Halterung, sondern auch der Wärmeabfuhr dient.

Die zunehmende Verbreitung von LED-Leuchtmitteln erfordert in zunehmendem Maße automatisierte Fertigungsvorgänge, wofür die bislang verwendeten Befestigungsmittel, beispielsweise Schrauben, weniger geeignet sind.

Die aus dem vorgenannten Stand der Technik bekannten Befestigungsmittel nutzen die in den Platinen und Leuchtenbauteilen vorhandenen Durchbrechungen und Ausnehmungen für die Schraubbefestigung, um durch rastende oder spreiznietartige, in jedem Fall einsteckbare Befestigungselemente, die Festlegung des LED-Leuchtmittels am Leuchtenbauteil zu bewerkstelligen.

Eine besondere Bedeutung kommt hierbei dem Anlagedruck zwischen LED-Platine und wärmeabführendem Leuchtenbauteil zu. Dieser muss innerhalb einer gewissen Bandbreite definiert sein, um eine bestmögliche Wärmeabfuhr und damit eine möglichst lange Lebensdauer der LED zu gewährleisten. Aus diesem Grund spielt die Verspannung von LED-Platine und Leuchtenbauteil eine große Rolle. Neben dem korrekten Anlagedruck werden über die Spannelemente der Befestigungselemente auch Fertigungstoleranzen ausgeglichen.

Auf den ersten Blick existieren zwischen den Befestigungsmitteln zur Befestigung von LED-Leuchtmitteln und ähnlich wirkenden Befestigungsmitteln aus dem Bereich der Automobiltechnik gewisse Gemeinsamkeiten. Tatsächlich erfordern Befestigungsmittel für die Festlegung von LED-Leuchtmitteln erheblich kleinere Strukturen. So sind die eingangs erwähnten Befestigungsmittel der WO 2015/007277 A2 maximal 7 mm lang und 5 mm breit und somit gegenüber dem gattungsfremden Stand der Technik der Automobilindustrie wesentlich kleiner.

WO 2010/101803 A1 zeigt ein Befestigungselement aus dem technischen Feld der Automobilindustrie, welches in verschiedenen Ausführungsformen mit vier Federarmen als Spannelementen außerordentlich komplex aufgebaut ist.

EP 1 630 426 A2 zeigt ebenfalls ein in der Automobiltechnik verwendetes Befestigungselement.

Die aus dem anmeldereigenen Stand der Technik bekannten, gattungsgemäßen Befestigungsmittel haben sich in der Praxis außerordentlich bewährt. Dennoch soll die Montage von LED-Leuchtmitteln und die Handhabung der hierfür vorgesehenen Befestigungsmittel weiter vereinfacht werden.

Insoweit ist es Aufgabe der Erfindung, ein neues Befestigungsmittel zur Festlegung zweier Bauteile aneinander, insbesondere zur Festlegung einer LED-Platine auf einem Leuchtenbauteil zu schaffen, welches in den Herstellungs- und Montagevorgang einfacher integrierbar ist.

Die erfindungsgemäße Aufgabe wird gelöst von einem Befestigungsmittel mit den Merkmalen des Anspruches 1, insbesondere mit den kennzeichnenden Merkmalen.

Die Nutzung einer Montageplatte, in welcher die Halteklammer des Befestigungsmittels vormontiert angeordnet ist, vereinfacht die Aufnahme der Befestigungsmittel durch Montageautomaten und ermöglicht darüber hinaus eine verbesserte Vormontage auf der LED-Platine.

Dem Schaftkopf entspringen genau zwei, den Schaft zwischen sich aufnehmende Federschenkel entspringen. Bei dieser Ausführungsform ist eine besonders gleichmäßige Andruckkraft gewährleistet.

Dies wird verbessert, wenn die Federschenkel dem Schaftkopf gegensinnig entspringen und gegensinnig unterhalb des Schaftkopfes hindurchgeführt sind.

Insbesondere zur Vormontage auf der LED-Platine ist vorgesehen, dass die dem Schaftkopf abgewandte Unterseite der Montageplatte mit einem Haftvermittler, insbesondere einer Lötmittelbeschichtung versehen ist, mittels derer die Montageplatte auf der Oberfläche des ersten Bauteils festlegbar ist. Beim anspruchsgemäßen Haftvermittler kann es sich um einen Kleber handeln. Es ist jedoch außerordentlich vorteilhaft, wenn die Vormontage des Befestigungsmittels in die automatische Bestückung der LED-Platine mit Elektronikkomponenten eingebunden werden kann. Deshalb ist insbesondere vorgesehen, die Montageplatte an ihrer dem Schaftkopf abgewandten Unterseite mit einer geeigneten Lötmittelbeschichtung, beispielsweise mit einem Lötzinn zu versehen. So kann die das Befestigungsmittel haltende Montageplatte wie die übrigen Elektronikkomponenten auf der Platine festgelötet werden, so dass ein zwischengelagerter Arbeitsgang der Befestigungsmittel-Vormontage zukünftig entfällt. Darüber hinaus entfallen im Idealfall auch bislang separat benötigte Bestückungsautomaten, da das erfindungsgemäße Befestigungsmittel von den zur Bestückung der Elektronikkomponenten bereits genutzten Automaten auf die Platine aufgebracht werden kann.

Um eine sichere und definierte Lage des Befestigungsmittels in der entsprechenden Durchbrechung der LED-Platine zu gewährleisten, ist vorgesehen, dass die Montageplatte wenigstens einen Zentrierschenkel aufweist, die in die Durchbrechung des ersten Bauteils einzugreifen in der Lage sind.

Es ist vorgesehen, dass die Montageplatte eine Auflagefläche für das Spannelement ausbildet.

Der wesentliche Vorteil hierbei ist, dass bei der Ausbildung des Spannelementes die Oberflächeneigenschaften der Platine außer Acht gelassen werden können. Werden beispielsweise, wie in einer bevorzugten Ausführungsform vorgesehen, Federschenkel als Spannelemente genutzt, entfallen größere konstruktive Anpassungen, um eine Schädigung der Platinenoberfläche zu vermeiden.

Es ist vorgesehen, dass der Federschenkel mit seinem freien Ende gleitend auf der Montageplatte gelagert ist.

Schließlich ist vorgesehen, dass das Halteelement des Schaftes als Rastfeder ausgebildet ist, die in vormontiertem Zustand am Zentrierschenkel der Montageplatte verrastet.

Im Übrigen folgen weitere Vorteile der Erfindung aus der nachfolgenden Beschreibung eines Ausführungsbeispiels. Es zeigen:

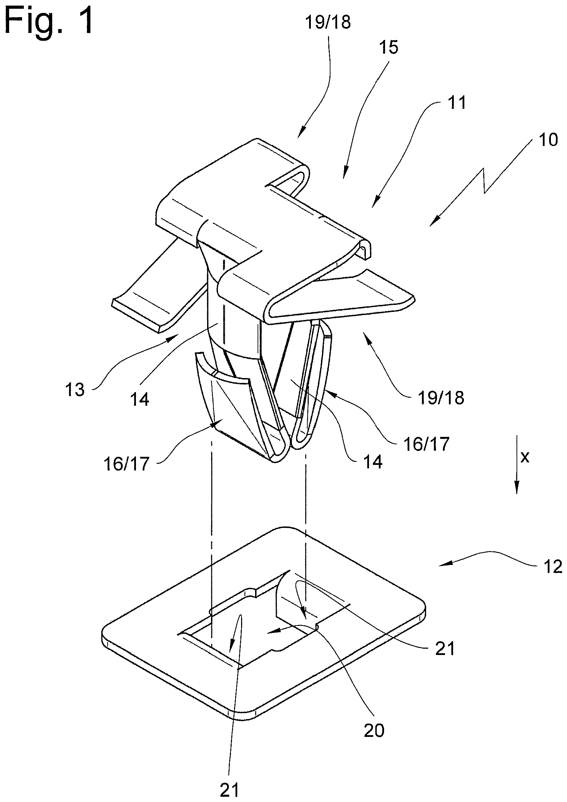

- Fig. 1:: Darstellung des erfindungsgemäßen Befestigungselementes mit Halteklammer und Montageplatte in Explosionsdarstellung,
- Fig. 2: das Befestigungselement gemäß Fig. 1 in Seitenansicht,
- Fig. 3:: Darstellung des Befestigungselementes gemäß Fig. 2 in einer ersten Montagesituation,
- Fig. 4:: die Darstellung gemäß Fig. 3 in abweichender Montagesituation,
- Fig. 5:: eine schematisch dargestellte LED-Leiterplatte,

- Fig. 6:: die Montage des erfindungsgemäßen Befestigungselementes gemäß Fig. 2 auf der Leiterplatte gemäß Fig. 5.

In den Figuren ist ein Befestigungselement insgesamt mit der Bezugsziffer 10 versehen.

Das Befestigungselement 10 umfasst eine Halteklammer 11 sowie eine Montageplatte 12.

Die Halteklammer 11 verfügt zunächst über einen Schaft 13. Dieser wird von zwei Schaftflügeln 14 gebildet, die einem Schaftkopf 15 entspringen. Jeder Schaftflügel 14 trägt an seinem freien Ende ein Halteelement 16, welches als Rastfeder 17 ausgebildet ist und durch Umbiegen eines Endabschnittes eines jeden Schaftflügels 14 entgegen einer Einsetzrichtung x erhalten wurde. Die freien Enden der Schaftflügel 14 liegen im Bereich der durch Umbiegen erhaltenen Rastfeder 17 aneinander an und stützten sich aneinander ab.

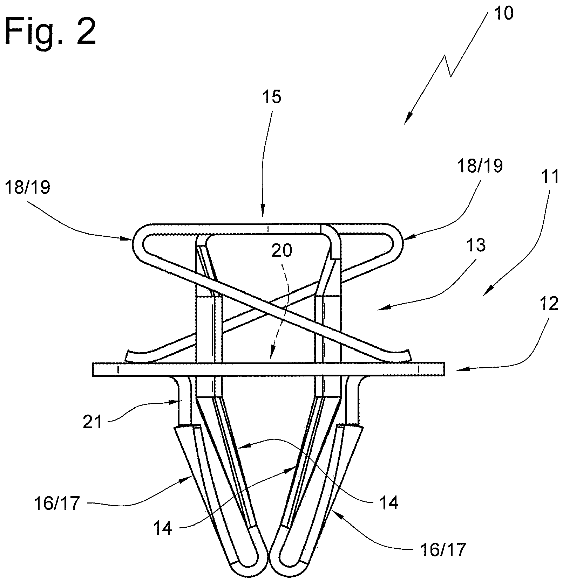

Der Schaftkopf 15 ist im Wesentlichen waagerecht zu einer Schaftlängsachse gerichtet. Ihm entspringen zwei Spannelemente 18 in Form von Federschenkeln 19. Die Federschenkel 19 nehmen den Schaft 13 zwischen sich auf und sind ihrem im Schaftkopf 15 liegenden Ursprung entgegengesetzt gerichtet und unter dem Schaftkopf 15 hindurchgeführt. Da die Federschenkel 19 dem Schaftkopf 15 in entgegengesetzter Richtung entspringen, sind sie auch in jeweils entgegengesetzter Richtung unter dem Schaftkopf 15 entlanggeführt, so dass sich in der Seitenansicht der Fig. 2 eine gekreuzte Anordnung der Federschenkel 19 ergibt.

Die Montageplatte 12 verfügt zunächst über eine Aufnahmeöffnung 20, in welche die Halteklammer 11 mit dem freien Ende des Schaftes 13 voran in Einsetzrichtung x einschiebbar ist. Zwei einander gegenüberliegende Zentrierschenkel 21 werden von der Montageplatte 12 ausgebildet und greifen in die Aufnahmeöffnung 20 ein. Sie sind parallel zur Schaftlängsachse und dem Spannkopf abgewandt aus der Ebene der Montageplatte 12 ausgestellt.

Bei Betrachtung der Fig. 2, welche die in der Montageplatte 12 vormontierte Halteklammer 11 zeigt, ist ersichtlich, dass die Rastfedern 17 der Schäfte 13 an den Zentrierschenkeln 21, welche bezüglich des Schaftkopfes 15 nach unten aus der Montageplatte 12 ausgestellt sind, verrasten. Hierbei liegen die Stirnflächen der Rastfedern 17 an den Stirnflächen der Zentrierschenkel 21 an.

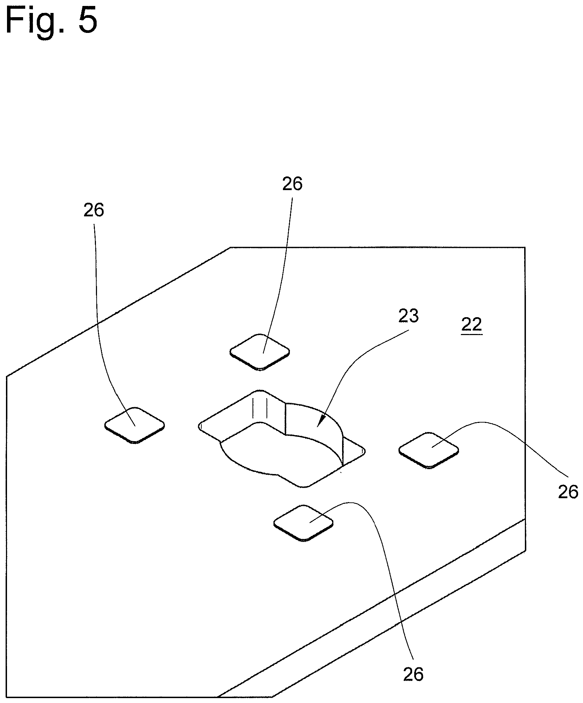

In Fig. 5 ist ein erstes Bauteil 22 dargestellt, welches eine Durchbrechung 23 aufweist. Hierbei handelt es sich in einem konkreten Ausführungsbeispiel um eine LED-Platine, auf welcher elektronische Bauteile und insbesondere die LED angeordnet und zur Spannungsversorgung mit Leiterbahnen untereinander verbunden sind. Um die Durchbrechung 23 herum sind Lötfelder 26 angeordnet, um die Montageplatte 12 dort zu befestigen.

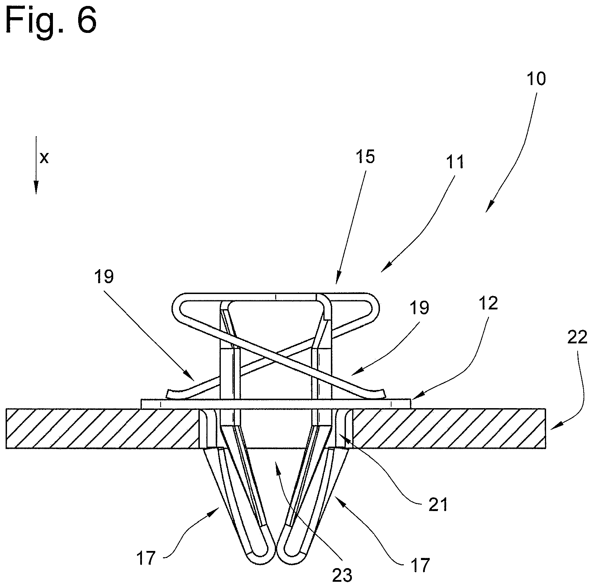

Fig. 6 zeigt das Befestigungselement 10, vormoniert auf der LED-Platine 22. Die Montageplatte 12, welche auf ihrer dem Schaftkopf 15 abgewandten Unterseite mit einem Haftvermittler, im vorliegenden Ausführungsbeispiel mit einem Lötmittel, beispielsweise Lötzinn, versehen ist, wird auf die LED-Platine 22 aufgesetzt, wobei die Zentrierschenkel 21 in die Durchbrechung 23 eingreifen. Hierdurch ist eine lagegerechte Anordnung des Befestigungselementes 10 auf der LED-Platine 22 sichergestellt. Durch die Anordnung der Montageplatte 12 auf der LED-Platine 22 ist auch die in der Montageplatte 12 vormontiert einsitzende Halteklammer 11 montagebereit an der LED-Platine 22 festgelegt. Die Befestigung der Montageplatte 12 an der LED-Platine 22 erfolgt in bevorzugter Weise durch Verlöten, hierzu wird das montageplattenseitige Lötzinn sowie im Zweifel auch auf den Lötfeldern 26 vorhandenes Lötzinn erhitzt und geht miteinander eine stoffschlüssige Verbindung ein, die beim Erkalten zur Festlegung des Befestigungselementes 10 auf der LED-Platine 22 führt.

Die Federschenkel 19 der Halteklammer 11 liegen auf der Oberseite der Montageplatte 12 auf, welche dem Schaftkopf 15 zugewandt ist. Sie sind dort gleitbeweglich gelagert.

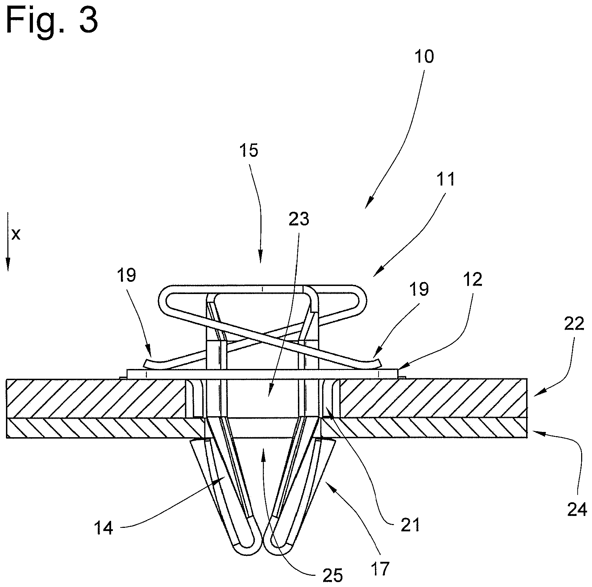

In einer ersten Montagesituation, dargestellt in Fig. 3, wurde die LED-Leiterplatte 12 auf ein zweites Bauteil 24 aufgesetzt, wobei dieses eine Ausnehmung 25 aufweist und bevorzugt ein Kühlkörper oder ein Montageblech einer Leuchte ist. Die Ausnehmung 25 ist in den hier dargestellten Ausführungsbeispielen als eine materialdurchsetzende Bohrung dargestellt. Es ist jedoch auch denkbar, dass die Ausnehmung 25 in konkreter Ausgestaltung ein Sackloch darstellt, welches ebenfalls unter den Begriff Ausnehmung zu subsumieren ist.

Zur Anordnung der LED-Platine 22 auf dem Leuchtenbauteil 24 werden Durchbrechung 23 und Ausnehmung 25 fluchtend zueinander ausgerichtet. Die Schaftflügel 14 der Halteklammer 11 tauchen in die Ausnehmung 25 ein. Diese ist in ihrem Durchmesser geringer als der Abstand zwischen den Innenflächen der Rastfedern 17, so dass diese im vorliegenden Ausführungsbeispiel nach Durchtauchen der Ausnehmung 25 die Unterseite des Leuchtenbauteils 24 hintergreifen und dort rastbefestigt sind. Hierbei muss die Halteklammer 11 in Einsetzrichtung x bewegt werden, was durch eine entsprechende Druckbeaufschlagung des Schaftkopfes 15 erreicht wird. Dabei werden die Federschenkel 19 des Schaftkopfes 15 rückstellelastisch ausgelenkt und beaufschlagen die Montageplatte 12 und hierüber die an den Rastfedern 17 widergelagerten Bauteile 22 und 24 mit einer Andruckkraft.

Auf diese Weise lässt sich ein definierter Anpressdruck zwischen LED-Platine 22 und Leuchtenbauteil 24 herstellen, der eine definierte Wärmeabfuhr ermöglicht.

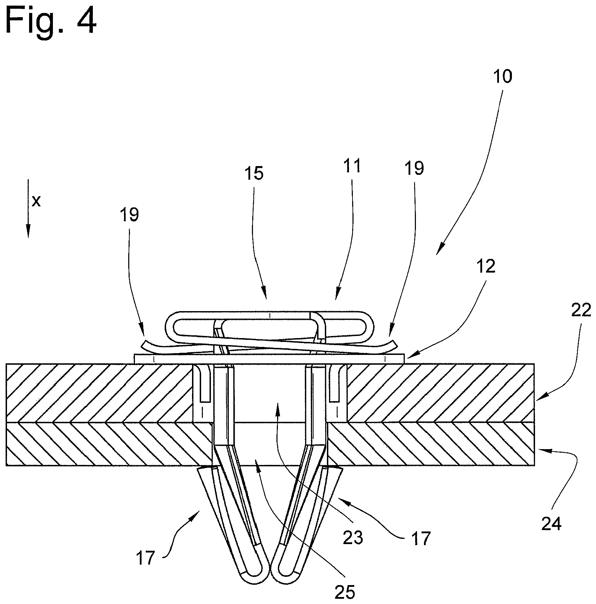

Fig. 4 zeigt eine der Fig. 3 weitestgehend entsprechende, in Teilen jedoch abweichende Montagesituation des Befestigungselementes 10. Die Materialstärken von LED-Platine 22 und Leuchtenbauteil 24 sind größer, beispielsweise hervorgerufen durch Fertigungstoleranzen. Durch den großen Federweg, welcher durch die spezielle Ausgestaltung der als Spannelement 18 dienenden Federschenkel 19 ermöglicht wird, lassen sich selbst derart große Materialtoleranzen ausgleichen, indem der Einschubweg in Einsetzrichtung x der Halteklammer 11 entsprechend vergrößert wird. Die hierdurch auf die Bauteile 12, 22 und 24 aufgebrachten Andruckkräfte sind entsprechend höher, was jedoch einer qualitativ hochwertigen Wärmeabfuhr keinen Abbruch tut.

Vorgestellt wurde also ein Befestigungselement 10, welches insbesondere tauglich ist zur Festlegung einer LED-Platine 22 an einem Leuchtenbauteil 24. Durch die Hinzufügung einer Montageplatte 12 zur Halteklammer 11 ist eine Vormontage des Befestigungselementes 10 auf der LED-Platine 22 im Rahmen der Bestückung mit elektronischen Bauteilen möglich. Die Montageplatte 12 hat darüber hinaus die Aufgabe, als Auflager für die Federschenkel 19 zu dienen, welche als Spannelemente 18 den Anpressdruck zwischen LED-Platine 22 und Leuchtenbauteil 24 definieren. Auf diese Weise können die Federschenkel 19 optimal auf ihren Zweck hin - das Aufbringen von Andruckkräften - ausgestaltet werden, da eine Beschädigung der Platinenoberfläche nicht möglich ist.

Die konkrete Ausgestaltung der Federschenkel 19 als unterhalb des Kopfes 15 entlang geführte Bauteile ermöglichen große Federwege und somit einen großen Einschubweg der Halteklammer 11, so dass erhebliche Materialtoleranzen ausgleichbar sind.

### Bezugszeichenliste

- 10: Befestigungselement
- 11: Halteklammer
- 12: Montageplatte
- 13: Schaft
- 14: Schaftflügel
- 15: Schaftkopf
- 16: Halteelement
- 17: Rastfeder
- 18: Spannelement
- 19: Federschenkel
- 20: Aufnahmeöffnung
- 21: Zentrierschenkel
- 22: erstes Bauteil
- 23: Durchbrechung
- 24: zweites Bauteil
- 25: Ausnehmung
- 26: Lötfelder

- x: Einsetzrichtung

## Patentansprüche

1. Befestigungselement (10) zur Festlegung zweier Bauteile (22, 24) aneinander, wobei das erste Bauteil (22) eine Durchbrechung (23) und das zweite Bauteil (24) eine Ausnehmung (25) aufweist und das Befestigungselement (10) zur Festlegung die Durchbrechung (23) durchtaucht und in der Ausnehmung (25) einsitzt, insbesondere zur Festlegung einer LED-Platine (22) auf einem Leuchtenbauteil (24),
- mit einer Halteklammer (11), wobei die Halteklammer (11)
- einen Schaft (13) ausbildet, an dessen einem Ende ein Schaftkopf (15) angeordnet ist,
- ein Spannelement (18) aufweist, welches am Schaftkopf (15) angeordnet ist,
- mit wenigstens einem Halteelement (16) versehen ist, welches den Schaft (13) in der Ausnehmung (25) des zweiten Bauteils (24) zu halten in der Lage ist,
**dadurch gekennzeichnet, dass**
- das Befestigungselement (10) eine Montageplatte (12) umfasst, in welcher die Halteklammer (11) vormontiert gehalten ist,
- die Montageplatte (12) wenigstens einen Zentrierschenkel (21) aufweist, der in die Durchbrechung (23) des ersten Bauteils (22) einzugreifen in der Lage ist.

2. Befestigungselement nach Anspruch 1, **dadurch gekennzeichnet, dass** die Montageplatte (12) eine Auflagefläche für das Spannelement (18) ausbildet.

3. Befestigungselement nach einem der Ansprüche 1 oder 2, **dadurch gekennzeichnet, dass** die dem Schaftkopf (15) abgewandte Unterseite der Montageplatte (12) mit einem Haftvermittler, insbesondere einer Lötmittelbeschichtung versehen ist, mittels derer die Montageplatte (12) auf der Oberfläche des ersten Bauteils (22) festlegbar ist.

4. Befestigungselement nach Anspruch 1, **dadurch gekennzeichnet, dass** die Federschenkel (19) der Halteklammer (11) gleitbeweglich auf der Oberseite der Montageplatte (12) gelagert sind.

5. Befestigungselement nach Anspruch 1, **dadurch gekennzeichnet, dass** der Schaft (13) von zwei Schaftflügeln (14) gebildet ist, wobei jeder Schaftflügel (14) ein Halteelement (16) in Form einer Rastfeder (17) ausbildet, die durch Umbiegen eines Endabschnittes eines jeden Schaftflügels (14) entgegen einer Einsetzrichtung (x) der Halteklemmer (11) erhalten ist.

6. Befestigungselement nach Anspruch 1, **dadurch gekennzeichnet, dass** die Montageplatte (12) zwei gegenüberliegende Zentrierschenkel (21) ausbildet.

7. Befestigungselement nach Ansprüchen 5 und 6, **dadurch gekennzeichnet, dass** die Rastfedern (17) der in der Montageplatte (12) vormontiert gehaltenen Halteklammer (11) an den Zentrierschenkeln (21) verrasten, indem die Stirnflächen der Rastfedern (17) an den Stirnflächen der Zentrierschenkel (21) anliegen.

8. Befestigungselement nach einem der Ansprüche 5 bis 7, **dadurch gekennzeichnet, dass** der Federschenkel (19) mit seinem freien Ende gleitend auf der Montageplatte (12) gelagert ist.

9. Befestigungselement nach Anspruch 1, **dadurch gekennzeichnet, dass** das Halteelement (16) des Schaftes (13) als Rastfeder (17) ausgebildet ist, die in vormontiertem Zustand am Zentrierschenkel (21) der Montageplatte (12) verrastet.

10. Befestigungselement nach Anspruch 1, **dadurch gekennzeichnet, dass**
- das Spannelement (18) durch wenigstens einen Federschenkel (19) gebildet ist, der dem Schaftkopf (15) entspringt,
- der Federschenkel (19) unter dem Schaftkopf (15) hindurchgeführt ist,
- dem Schaftkopf (15) genau zwei, den Schaft (13) zwischen sich aufnehmende Federschenkel (19) entspringen,
- die genau zwei Federschenkel (19) dem Schaftkopf (15) gegensinnig entspringen und gegensinnig unterhalb des Schaftkopfes (15) hindurchgeführt sind, so dass sich in der Seitenansicht eine gekreuzte Anordnung der Federschenkel (19) ergibt,
- die Federschenkel (19) der Halteklammer (11) auf der dem Schaftkopf (15) zugewandten Oberseite der Montageplatte (12) aufliegen.

## Claims

1. Fastening element (10) for securing two components (22, 24) to each other, wherein the first component (22) has an opening (23) and the second component (24) has a recess (25), and the fastening element (10) plunges through the opening (23) and sits in the recess (25) in order to be secured, in particular for securing an LED circuit board (22) on a lighting component (24),
- having a retaining clip (11), wherein the retaining clip (11)
∘ forms a shaft (13), at one end of which a shaft head (15) is arranged,
∘ has a clamping element (18) which is arranged on the shaft head (15),
∘ is provided with at least one retaining element (16),
which is capable of holding the shaft (13) in the recess (25) of the second component (24),
**characterised in that**
- the fastening element (10) comprises a mounting plate (12), in which the retaining clip (11) is held pre-assembled,
- the mounting plate (12) has at least one centring leg (21) which is capable of engaging in the opening (23) of the first component (22).

2. Fastening element according to claim 1, **characterised in that** the mounting plate (12) forms a bearing surface for the clamping element (18).

3. Fastening element according to one of claims 1 or 2, **characterised in that** the underside of the mounting plate (12) facing away from the shaft head (15) is provided with an adhesive agent, in particular a solder coating, by means of which the mounting plate (12) can be fixed to the surface of the first component (22).

4. Fastening element according to claim 1, **characterised in that** the spring legs (19) of the retaining clip (11) are slidably mounted on the upper side of the mounting plate (12).

5. Fastening element according to claim 1, **characterised in that** the shaft (13) is formed by two shaft wings (14), wherein each shaft wing (14) forms a retaining element (16) in the form of a latch spring (17) which is obtained by bending an end section of each shaft wing (14) counter to an insertion direction (x) of the retaining clip (11).

6. Fastening element according to claim 1, **characterised in that** the mounting plate (12) forms two opposing centring legs (21).

7. Fastening element according to claims 5 and 6, **characterised in that** the latch springs (17) of the retaining clip (11), which is held pre-assembled on the mounting plate (12), latch on the centring legs (21) by the end faces of the latch springs (17) abutting on the end faces of the centring legs (21).

8. Fastening element according to one of claims 5 to 7, **characterised in that** the spring leg (19) is slidably mounted with its free end on the mounting plate (12).

9. Fastening element according to claim 1, **characterised in that** the holding element (16) of the shaft (13) is formed as a latch spring (17) which, in the pre-assembled state, latches on the centring leg (21) of the mounting plate (12).

10. Fastening element according to claim 1, **characterised in that**
- the clamping element (18) is formed by at least one spring leg (19), which emerges from the shaft head (15),
- the spring leg (19) is guided through under the shaft head (15),
- exactly two spring legs (19), which receive the shaft (13) between them, emerge from the shaft head (15),
- the exactly two spring legs (19) emerge from the shaft head (15) in opposite directions and are guided through in opposite directions below the shaft head (15), such that it results in a crossed arrangement of the spring leg (19) in the side view,
- the spring legs (19) of the retaining clip (11) rest on the upper side of the mounting plate (12) facing the shaft head (15).

## Revendications

1. Elément de fixation (10) pour l'assemblage de deux composants (22, 24) entre eux, le premier composant (22) présentant une découpe (23) et le deuxième composant (24) présentant un logement (25) et l'élément de fixation (10) traversant la découpe (23) et pénétrant dans le logement (25) pour l'assemblage, en particulier pour l'assemblage d'une platine à LED (22) sur un composant de luminaire (24),
- avec une agrafe de retenue (11), laquelle agrafe de retenue (11)
- forme une tige (13) à une extrémité de laquelle est disposée une tête de tige (15),
- présente un élément de tension (18) qui est disposé sur la tête de tige (15) et
- est dotée d'au moins un élément de retenue (16) qui est en mesure de retenir la tige (13) dans le logement (25) du deuxième composant (24),
**caractérisé en ce que**
- cet élément de fixation (10) comprend une plaque de montage (12) dans laquelle l'agrafe de retenue (11) est retenue de façon prémontée,
- la plaque de montage (12) présente au moins une jambe de centrage (21) qui est en mesure de s'insérer dans la découpe (23) du premier composant (22).

2. Elément de fixation selon la revendication 1, **caractérisé en ce que** la plaque de montage (12) forme une surface de support pour l'élément de tension (18).

3. Elément de fixation selon une des revendications 1 ou 2, **caractérisé en ce que** la face inférieure de la plaque de montage (12) opposée à la tête de tige (15) est dotée d'un agent d'adhérence, en particulier d'un revêtement d'agent de brasage, au moyen duquel la plaque de montage (12) peut être assemblée sur la face supérieure du premier composant (22).

4. Elément de fixation selon la revendication 1, **caractérisé en ce que** la jambe élastique (19) de l'agrafe de retenue (11) est montée de manière à coulissante sur la face supérieure de la plaque de montage (12).

5. Elément de fixation selon la revendication 1, **caractérisé en ce que** la tige (13) est formée de deux ailes de tige (14), chaque aile de tige (14) constituant un élément de retenue (16) sous la forme d'un ressort d'accrochage (17) qui est obtenu par le pliage d'une section d'extrémité de chacune des ailes de tige (14) dans un sens opposé au sens d'insertion (x) de l'agrafe de retenue (11).

6. Elément de fixation selon la revendication 1, **caractérisé en ce que** la plaque de montage (12) forme deux jambes de centrage (21) opposées.

7. Elément de fixation selon les revendications 5 et 6, **caractérisé en ce que** les ressorts d'accrochage (17) de l'agrafe de retenue (11) retenue de façon prémontée dans la plaque de montage (12) s'accrochent sur les jambes de centrage (21) du fait que les faces frontales des ressorts d'accrochage (17) s'appuient sur les faces frontales des jambes de centrage (21).

8. Elément de fixation selon une des revendications 5 à 7, **caractérisé en ce que** la jambe élastique (19) est montée avec son extrémité libre coulissant sur la plaque de montage (12).

9. Elément de fixation selon la revendication 1, **caractérisé en ce que** l'élément de retenue (16) de la tige (13) est configuré comme un ressort d'accrochage (17) qui, à l'état prémonté, s'accroche sur la jambe de centrage (21) de la plaque de montage (12).

10. Elément de fixation selon la revendication 1, **caractérisé en ce que**
- l'élément de tension (18) est constitué par au moins une jambe élastique (19) qui entraîne la tête de tige (15),
- la jambe élastique (19) est insérée sous la tête de tige (15),
- exactement deux jambes élastiques (19) recevant la tige (13) entre elles entraînent la tête de tige (15),
- les exactement deux jambes élastiques (19) entraînent la tête de tige (15) en sens contraires et sont insérées en sens contraires sous la tête de tige (15), de sorte qu'il résulte en vue latérale une disposition croisée des jambes élastiques et
- les jambes élastiques (19) de l'agrafe de retenue (11) reposent sur la face supérieure de la plaque de montage (12) orientée vers la tête de tige (15).
